# EUROPEAN PATENT APPLICATION

(11) **EP 1 199 828 A2**
(43) Date of publication of application: **24.04.2002**
(21) Application number: 01123271.7
(22) Date of filing: 04.10.2001
(51) Int. Cl.: H04L 1/00, H04B 7/185

(54) **High efficiency signaling with selective coding and interleaving**

(30) Priority: 20.10.2000 US 693752
(71) Applicant: TRW Inc., Redondo Beach, California 90278 (US)
(72) Inventor: Saunders, Oliver W., Los Angeles, CA 90066 (US); Berger, Harvey L., Redondo Beach, CA 90278 (US)
(74) Representative: Schmidt, Steffen J., Dipl.-Ing.

(57) **Abstract**

A method is disclosed for efficiently transmitting large numbers of data channels through a satellite (24). The method uses a block encoder (28) that encodes the data channels with a block code to produce an encoded uplink data stream. A modulator (30) modulates the encoded uplink data stream. A transmit antenna (32) then sends the resultant modulated uplink data stream (34) to the satellite (24). The satellite uses a satellite demodulator (48) and a switch (50) to produce an internal data stream consisting of selected data channels in the uplink data stream (34). The internal data stream is fed into a convolutional encoder (52). The output of the convolutional encoder (52) is connected to a satellite modulator (54). The satellite transmit antenna (56) then sends the resultant modulated downlink data stream (58) to a receiver.

## Description

### Background of the Invention

The present invention relates to satellite communications. More specifically, the invention relates to a satellite communication system that includes a communication satellite and ground terminals that employ flexible signal coding and interleaving.

Modern communications networks carry staggering amounts of information, typically divided for transmission purposes into individual data channels. Whether the data channels carried by the communications network have their origin in the telephone system, television stations, the Internet, or another source, the data channels are often multiplexed into a smaller number of data streams and transmitted through a communication satellite.

A single satellite may have, for example, 30 or 40 uplink transponders, each able to accept a data stream with a bandwidth of 250 MHz. The resultant uplink data path would then have a capacity of 8 to 10 gigabits per second. Where a satellite is a link in the communications network, Customer Premises Equipment (CPE) may multiplex the data channels into a single data stream, as well as encode, modulate, and transmit the uplink data stream to the satellite.

Because the uplink data stream sent to the satellite is susceptible to numerous sources of interference that can corrupt the uplink data stream, the CPE encodes the data stream with error protection codes. The first code the CPE applies is typically a block code. The block code essentially adds parity bits to each predefined number of bits in a data channel. The block encoded data channels are then further encoded with a convolutional code to reduce the bit error rate (BER) to a tolerable level (BER is the ratio of incorrectly received bits to the total number of received bits). The sequence of coding described above is often referred to as "concatenated coding".

Concatenated coding, although robust, presents a coded data stream that requires very sophisticated hardware to decode. The satellite must convolutionally decode each data channel recovered from the uplink data stream before the bits in each individual data channel can be recovered. In other words, a relatively complex, power consuming decoding processing path for data channels exists in the satellite.

The processing path for the uplink data streams typically includes stages for receiving, decoding, switching, re-encoding, and transmitting downlink data streams to their destinations. The switching stage separates individual data channels from the uplink data streams and combines them with other data channels to form a downlink data stream that will be sent through a downlink antenna to a predetermined destination. A satellite would need a convolutional decoder followed by a block decoder to extract each data channel in the uplink data stream. Today, tens of thousands of channels may compete for services in an uplink data stream to be processed by the communications satellite. A single satellite would require enormous amounts of space, weight, and power to convolutionally decode each channel individually.

Increasing the size, weight, and onboard power of a satellite so that it can decode more data channels drives up the cost of the satellite dramatically. Not only does the satellite itself become more expensive because of the additional decoder circuitry and solar panels used to provide onboard power, but it also costs more to launch the satellite because larger rockets using more propellant are required to put the satellite into orbit.

The problem becomes even more significant when the highly complex encoding schemes employed by modern communications techniques are considered. One example of such a technique is Code Division Multiple Access (CDMA). This technique uses sophisticated encoding to generate massive amounts of data for the communication network to carry. CDMA transmissions to a satellite may, for example, divide the 250 MHz transponder bandwidth into smaller bandwidths of approximately 1.2 MHz, each carrying data channels for dozens of users. In order for the satellite to decode the data channel for each user, the satellite would have to carry an enormous number of heavy, complex decoding electronics, and generate enormous amounts of power. Thus, satellite size, weight, and power restrictions prohibit the satellite from handling the large numbers of data channels that modern communications techniques can generate.

Therefore a need is present in the industry for an improved communications network, which overcomes the disadvantages discussed above and others previously experienced.

### SUMMARY OF THE INVENTION

The invention provides a method for communicating data through a satellite. The method comprises forming an outer coded data stream by outer coding source data with an outer block code. A concatenated coded data stream is formed by inner coding the outer coded data stream with a short block code. The concatenated coded data stream is received at the satellite and the short block code on the concatenated coded data stream is inner decoded to form a recovered outer coded data stream. The recovered outer coded data stream is then interleaved to form an interleaved recovered outer coded data stream.

Next, the recovered outer coded data stream is inner coded without decoding the outer block code to form a downlink data stream. The receiver is then informed of the second inner code applied on the satellite to the downlink data stream.

### DESCRIPTION OF THE DRAWINGS

Figure 1 shows customer premises equipment and a satellite cooperating in a communications network.
Figure 2 illustrates customer premises equipment and a satellite cooperating in a modified communications network.
Figure 3 illustrates a flow diagram of a method for communicating data through a satellite.

### DETAILED DESCRIPTION OF THE INVENTION

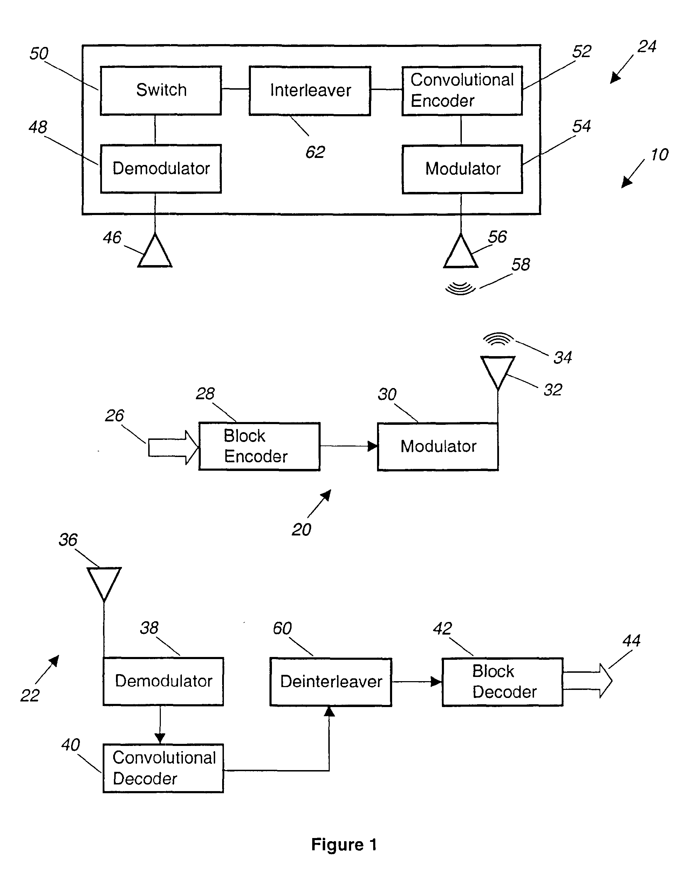

Turning now to Figure 1, a block diagram of a communications network 10 is shown. The communications network 10 includes one or more transmitters (e.g., the transmitter 20), receivers (e.g., the receiver 22), and satellites (e.g., the satellite 24). The transmitter 20, receiver 22, and satellite 24 are sometimes referred to collectively as Customer Premises Equipment (CPE).

The transmitter 20 includes a data input 26, which carries the input data channels that will be transmitted through the satellite 24. A block encoder 28 is connected to the data input 26. The output of the block encoder 28 is connected to the modulator 30. The modulator 30 produces an information bearing waveform that is amplified by a power amplifier (not shown) to drive the transmit antenna 32 and produce the modulated uplink data stream 34.

The receiver 22 includes a receiver antenna 36 connected to a demodulator 38. The output of the demodulator 38 is connected to a convolutional decoder 40, which, in turn, is connected to a deinterleaver 60 followed by a block decoder 42. The data output 44 of the block decoder 42 carries decoded output data channels that are reproductions of the input data channels carried on data input 26.

The satellite 24 includes a satellite receive antenna 46 which is connected to a satellite demodulator 48. The output of the satellite demodulator 48 is connected to a switch 50, which, in turn, is connected to an interleaver 62 followed by a convolutional encoder 52. The convolutional encoder 52 feeds a satellite modulator 54 which drives the satellite transmit antenna 56 to produce the downlink data stream 58.

Still with reference to Figure 1, the operation of the transmitter 20 is described next. The data input 26 connects input data channels to a block encoder 28 in the transmitter 20. The input data channels may have been generated by virtually any number of sources including, for example, the telephone system, television stations, and Internet links.

The block encoder 28 generates an encoded uplink data stream by coding the input data channels with a block code. The encoded uplink data is thereby protected by adding parity bits to the data in the input data channels according to a predetermined mapping between input bits and associated parity sequences. In a preferred embodiment, the block code may be a Reed-Solomon code, a Bose-Chaudhuri-Hocquenghem (BCH) code, and the like.

In general, a block code appends the coded data with parity bits, but otherwise leaves the data unchanged. Note that convolutional coding is not applied to the individual data channels, as is typically the case in satellite communications. Unlike convolutional encoding, block encoding does not disturb the original bit order in the input data channels carried on the data input 26. Thus, the satellite 24 may recover the bits in the input data channels without complicated convolutional decoding hardware.

In particular, the input data channels are often divided into frames of a predetermined bit length. Because the transmitter 20 does not apply convolutional coding to the input data channels, the satellite may recover and process the frames without heavy, expensive, and power consuming convolutional decoding hardware used to reconstruct the original bit pattern in the frames in each input data channel. Furthermore, the transmitter 20 benefits from simplified design, lower cost, and higher reliability by eliminating the convolutional encoders.

The encoded uplink data stream is fed into the modulator 30. In preparation for uplink transmission, the CPE modulator generates a modulated uplink data stream by applying an efficient transmission modulation to the encoded uplink data stream. Among the many suitable modulation schemes that the modulator 30 may use are Quadrature Phase Shift Keying (QPSK) and Binary Phase Shift Keying (BPSK). Subsequently, a power amplifier (not shown), typically applies the modulated uplink data stream to the transmit antenna 32 to produce an uplink data stream 34.

To compensate for the lack of an inner convolutional code, the transmitter 20 may increase the transmitted signal strength out of the transmit antenna 32. By increasing the signal strength, the average bit energy present in the uplink data stream 34, Eb, is increased. Compared to the average level of the background noise, No, a transmit power that increases Eb/No to approximately 8.5 decibels (db) is typically sufficient to allow the uplink data stream to reach the satellite 24 with a BER of less than 10⁻¹⁰.

The satellite 24 processes the uplink data stream 34 received at the satellite receive antenna 46. The satellite demodulator 48 generates a demodulated uplink data stream by removing the modulation from the uplink data stream 34. Thus, the satellite demodulator 48 produces output data on which the only encoding is block encoding (the result of the block encoder 28). The demodulation process may be accomplished using a hard-decision or soft-decision technique, for example, although the detection quality information obtained by soft decision demodulation is not used in this technique.

Note that no convolutional decoding is necessary to reproduce the bit patterns in the input data channels for processing, since the CPE transmitter 20 did not apply convolutional encoding on the ground. Conventional networks do typically add convolutional coding, however, and a satellite in a conventional network would therefore potentially need a convolutional decoder for each input data channel in each uplink data stream. Thus, the elimination of convolutional decoders in the satellite 24 translates into tremendous savings in weight, power, and space, particularly when the number of input data channels begins to grow.

The data output of the satellite demodulator 48 is connected to the switch 50. The switch 50 combines input data channels (still block encoded) recovered by the satellite demodulator 48 into an internal data stream. The internal data stream may consist, for example, only of input data channels of a predetermined type, destination, or other characteristic. The switch 50 may also produce an internal data stream from demodulated uplink data streams provided by more than one satellite receive antenna 46.

The internal data stream is connected to the interieaver 62. As examples, the interleaver 62 may be implemented as a block or convolutional type of interleaver. The interleaver rearranges bits in the internal data stream as protection against burst errors on the downlink. Thus, for example, the interleaver may use a memory that stores the internal data stream in column format, but that reads the internal data stream out in row format. Burst errors are thus distributed over several code blocks, decreasing the probability that a single burst error corrupted block will be uncorrectable at the receiver.

After interleaving to form an interleaved data stream, the convolutional encoder 52 generates an encoded downlink data stream from the interleaved data stream. In the process, the convolutional encoder 52 adds error protection and detection information to the internal data stream. A constraint length 7, rate 3/4, punctured convolutional code may be employed, as one example.

The encoded downlink data stream is subsequently fed into the satellite modulator 54. Like the CPE modulator 30, the satellite modulator 54 may use one of many modulation schemes, including QPSK or BPSK. The resultant modulated downlink data stream is applied to the satellite transmit antenna 56, which produces the downlink data stream 58. Note that the satellite 24 has enhanced the error protection and correction capabilities of the downlink data stream 58 with a convolutional code and interleaving. As a result, the satellite 24 can rely on a downlink data stream that is substantially less powerful than the uplink data stream to communicate the downlink data to the ground with a satisfactory BER. For example, an Eb/No of 4.5 db is typically sufficient (approximately 1/3 as strong as the uplink data stream described above). This translates directly into additional power savings for the satellite 24 multiplied by the number of downlink data streams that the satellite 24 produces.

At the receiver 22, the downlink data stream 58 is received on the receive antenna 36. The received signal is connected to a demodulator 38, which restores the downlink data stream 58 to the form it was in before the satellite modulator 54 modified it for transmission. The output of the demodulator 38 is therefore a reproduced encoded downlink data stream. Thus, the demodulator 38 output is a block coded data stream that is further interleaved and convolutionally encoded (the result of the action of the block encoder 28, subsequent interleaving by the interleaver 62, and convolutional encoding by the convolutional encoder 52).

The reproduced encoded downlink data stream passes through a convolutional decoder 40. The convolutional decoder 40 generates a reproduced interleaved data stream, which, in the absence of transmission errors, is a duplicate of the interleaved data stream generated by the interleaver 62. Next, the deinterleaver 60 reverses the interleaving process as applied by the interleaver 62. The resultant reproduced internal data stream thus mimics the encoded uplink data stream generated by the block encoder 28. The reproduced internal data stream is thus ready for decoding by the block decoder 42.

In particular, the CPE block decoder removes the original block encoding placed on the individual data channels by the block encoder 28. The result is that the data output 44 contains reproductions of selected input data channels. The data output 44 carries the input data channels selected by the switch 50 and transmitted to the CPE receiver 22 in the form of the downlink data stream 58.

Note that the above described method allows the satellite to process a large number of input data channels without a corresponding increase in size, weight, or power consumption. These benefits flow directly from the fact that no convolutional decoder is necessary in the satellite 24 to reproduce the input data channels for processing, unlike in a conventional network. In a conventional network, a satellite would potentially need a convolutional decoder for each input data channel in each uplink data stream. Thus, the elimination of convolutional decoders in the satellite 24 translates into tremendous savings in weight, power, and space.

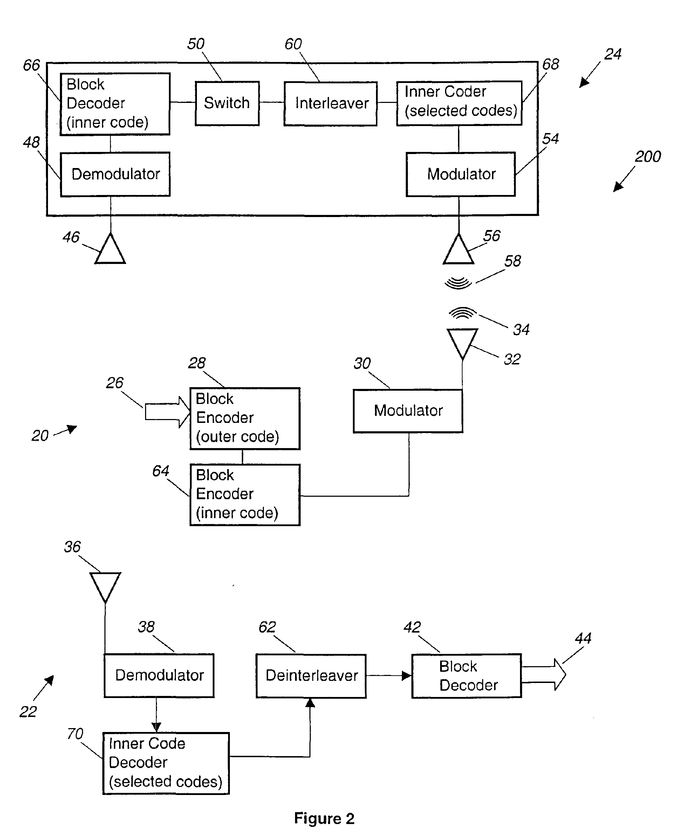

Turning now to Figure 2, that figure shows an alternative implementation of a communication network 200. The communication network 200 includes, as before, the transmitter 20, receiver 22, and satellite 24 with identical elements labeled identically. Note however, that the transmitter 20 includes a second block encoder 64 and that the satellite 24 includes a corresponding block decoder 66. In addition, the satellite 24 includes a selective inner coder 68 and the receiver includes a corresponding decoder 70.

With reference to the block encoder 64, that encoder preferably applies a modest or short inner block code. As examples, the short inner block code may be a Bi-orthogonal (8, 4), Nordstrom-Robinson (16, 8), or Golay (24, 12) code. Note that the short inner block code is much less complex than the outer block code applied by the block encoder 28. As a result, the corresponding block decoder 66 on the satellite 24 may be implemented without substantial increases in processing power, complexity, or power consumption. Nevertheless, the addition of the inner block code provides a substantial benefit in uplink error performance.

Note also that the short inner block code is replaced on board the satellite 24 by the selective inner coder 68. The selective inner coder 68 may apply, for example, the convolutional code identified above, or may apply a Turbo product code or one of several forms of convolutional Turbo codes, as examples. The selection of inner code may be in response to information uplinked by a ground based network control center, for example, or may be determined by the satellite in response to measured downlink signal path conditions, target bit error rate, and the like.

Note that the satellite 24 does not decode both the outer block code and the inner short block code. Rather, the satellite removes only the short inner block code, then applies a selected heavier inner code. The concatenated code formed on board the satellite thus provides in the downlink a heavily coded data stream, as expected by the receiver 22. In other words, the sequence of coding is transparent to the receiver 22.

The embodiment shown in Figure 2 may, in many instances provide enhanced end to end error performance. The enhancement arises first from the opportunity to correct uplink errors applying the short block code on the ground and decoding the short block code on the satellite, and also from the opportunity to apply a selective, optionally much heavier, inner code for data to be sent in the downlink.

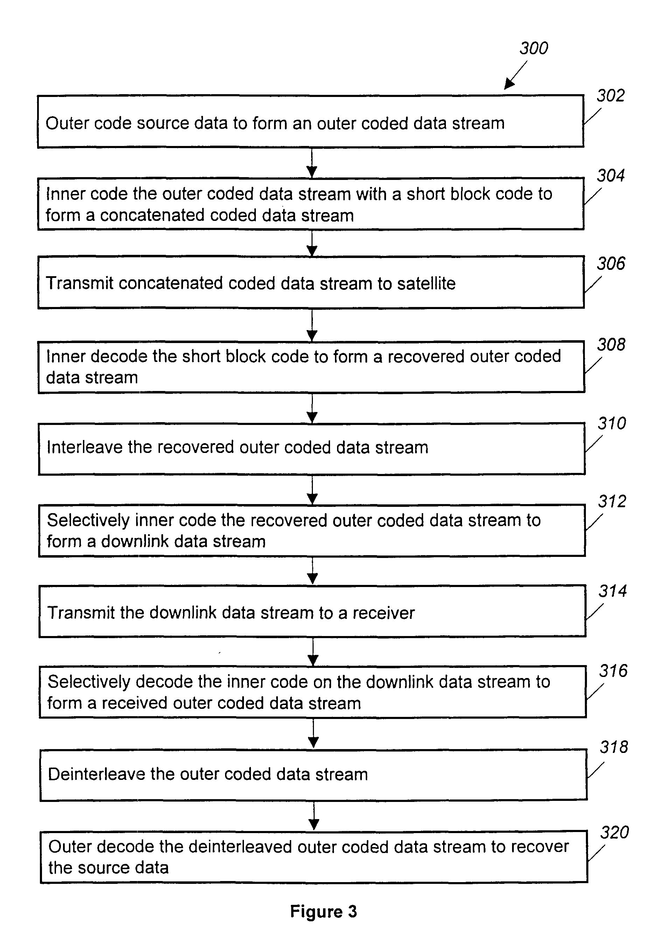

Turning next to Figure 3, that figure illustrates a flow diagram 300 of a method for communicating data through a satellite. First, the transmitter outer codes 302 source data to form an outer coded data stream. The outer coded data stream is inner coded 304 with a short block code to form a concatenated coded data stream. The transmitter 20 then transmits the concatenated coded data stream to the satellite 24.

The satellite 24 inner decodes 308 the short block code to form a recovered outer coded data stream. The satellite 24 may optionally interleave 310 the recovered outer coded data stream and selectively inner code 312 the recovered outer coded data stream to form a downlink data stream. The satellite 24 then transmits 314 the downlink data stream to the receiver 22. In addition, the receiving is informed of the inner code applied to the downlink data stream, for example by the satellite itself, or through a network control center that is controlling the satellite coding operations.

The receiver 22 selectively decodes the inner code on the downlink data stream to form a received outer coded data stream. Subsequently, the receiver 22 deinterleaves 318 (if interleaving was applied) the received outer coded data stream. After the receiver outer decodes 320 the received outer coded data stream, the source data is recovered.

While the invention has been described with reference to a preferred embodiment, those skilled in the art will understand that various changes may be made and equivalents may be substituted without departing from the scope of the invention. In addition, many modifications may be made to adapt a particular step, structure, or material to the teachings of the invention without departing from its scope. Therefore, it is intended that the invention not be limited to the particular embodiment disclosed, but that the invention will include all embodiments falling within the scope of the appended claims.

## Claims

1. A satellite communication network comprising:
a transmitter including an outer coder for producing an outer coded data stream from source data, and an short block code inner coder for producing a concatenated coded data stream from the outer coded data stream;
a satellite comprising an inner decoder for decoding the short block code on the concatenated coded data stream to form a recovered outer coded data stream, an interleaver for interleaving the recovered outer coded data stream to form an interleaved recovered outer coded data stream, and a selective inner coder for inner coding the recovered outer coded data stream without decoding the outer block code to form a downlink data stream.

2. The satellite communication network of claim 1 further comprising:
a receiver for receiving the downlink data stream to form a received downlink data stream, the receiver including a selective inner decoder for inner decoding the received downlink data stream to form a received outer coded data stream, a deinterleaver for deinterleavinq the received outer coded data stream to form a deinterleaved received outer coded data stream, and an outer decoder for decoding the deinterleaved received outer coded data stream to recover the source data.

3. The satellite communication network of claim 1, wherein the outer coder is an (8,4) outer coder.

4. The satellite communication network of claim 1, wherein the outer coder is an (16, 8) outer coder.

5. The satellite communication network of claim 1, wherein the inner coder is a convolutional inner coder.

6. The satellite communication network of claim 1, wherein the inner coder is a block inner coder.

7. The satellite communication network of claim 1, wherein the inner coder is a Turbo inner coder.
